# EUROPÄISCHE PATENTANMELDUNG

(11) **EP 4 047 735 A1**
(43) Veröffentlichungstag der Anmeldung: **24.08.2022**
(21) Anmeldenummer: 22150708.0
(22) Anmeldetag: 10.01.2022
(51) Int. Cl.: H01M 50/533

(54) **STROMABLEITERSYSTEM FÜR EINE BATTERIEZELLE**

(30) Priorität: 15.01.2021 DE 102021200367
(71) Anmelder: VOLKSWAGEN AG, 38440 Wolfsburg (DE)
(72) Erfinder: BREUER, Alexander, 29227 Celle (DE); STUEHM-VAN DOREN, Kai, 38527 Meine (DE)
(74) Vertreter: FDST Patentanwälte

(57) **Zusammenfassung**

Die Erfindung betrifft ein Stromableitersystem (2) für eine Batteriezelle, aufweisend einen Kathodenableiter (4) und einen Anodenableiter (6), welche jeweils mit einem Vorsiegelband (8) versehen sind, wobei der Kathodenableiter (4) und der Anodenableiter (6) jeweils mit einem ersten Musterelement (10) und mit einem zweiten Musterelement (12) versehen sind, wobei die ersten und zweiten Musterelemente (10, 12) unterschiedliche Geometrien aufweisen, und wobei der Kathodenableiter (4) und der Anodenableiter (6) eine unterschiedliche Anordnung oder Positionierung der ersten und zweiten Musterelemente (10, 12) aufweisen.

## Beschreibung

Die Erfindung betrifft ein Stromableitersystem für eine Batteriezelle, insbesondere für eine Pouchzelle, aufweisend einen Kathodenableiter und einen Anodenableiter, welche jeweils mit einem Vorsiegelband versehen sind.

Elektrisch beziehungsweise elektromotorisch angetriebene oder antreibbare Kraftfahrzeuge, wie beispielsweise Elektro- oder Hybridfahrzeuge, umfassen in der Regel einen Elektromotor, mit dem eine oder beide Fahrzeugachsen antreibbar sind. Zur Versorgung mit elektrischer Energie ist der Elektromotor üblicherweise an eine fahrzeuginterne (Hochvolt-)Batterie als elektrischen Energiespeicher angeschlossen.

Unter einer insbesondere elektrochemischen Batterie ist hier und im Folgenden insbesondere eine sogenannte sekundäre Batterie (Sekundärbatterie) des Kraftfahrzeugs zu verstehen. Bei einer solchen (sekundären) Fahrzeugbatterie ist eine verbrauchte chemische Energie mittels eines elektrischen (Auf-)Ladevorgangs wiederherstellbar. Derartige Fahrzeugbatterien sind beispielsweise als elektrochemische Akkumulatoren, insbesondere als Lithium-Ionen-Akkumulatoren, ausgeführt. Zur Erzeugung oder Bereitstellung einer ausreichend hohen Betriebsspannung weisen solche Fahrzeugbatterien typischerweise mindestens ein Batteriezellmodul auf, bei welchem mehrere einzelne Batteriezellen modular verschaltet sind.

Die Batteriezellen sind beispielsweise als elektrochemische (Dünn-)Schichtzellen ausgeführt. Die Dünnschichtzellen weisen einen geschichteten Aufbau mit einer Kathodenschicht (Kathode) und mit einer Anodenschicht (Anode) sowie mit einer dazwischen eingebrachten Separatorschicht (Separator) auf. Diese Bestandteile werden beispielsweise von einem flüssigen Elektrolyten (Flüssigelektrolyt) durchdrungen, welcher eine ionenleitfähige Verbindung der Bestandteile beziehungsweise einen Ladungsausgleich erzeugt. In der Regel sind hierbei mehrere Schichtzellen als ein Zellenstapel übereinandergestapelt angeordnet.

Zur Herstellung von Batteriezellen wird beispielsweise eine Aktivmaterial- oder Elektrodenmaterialschicht, auf einen Ableiterfähnchen aufgetragen. Die Ableiterfähnchen sind hierbei häufig als Metallfolien ausgeführt, wobei typischerweise Kupferfolien für die Anodenschichten und Aluminiumfolien für die Kathodenschichten eingesetzt werden. Derart beschichtete Stromableiter oder Ableiterfähnchen werden als gestapelte Elektroden (Elektrodenstapel) verwendet. Die Ableiterfähnchen des Elektroden- oder Zellenstapels werden miteinander zu einer gemeinsamen Anode und einer gemeinsamen Kathode, welche nachfolgend auch als Stromableiter, Ableitertab, Stromsammler oder Kollektoren bezeichnet werden, elektrisch kontaktiert. Im Betrieb wird der elektrische Strom der Batteriezelle über die Stromableiter an einen äußeren (externen) Stromkreis geleitet.

Um den Zellenstapel (Elektrodenstapel) gegen ein Eindringen von Feuchtigkeit und/oder Schmutz schützen, sowie andererseits ein Austreten von Chemikalien beziehungsweise des Flüssigelektrolyten im Falle einer Beschädigung der Batteriezelle zu verhindern, ist in der Regel ein Zellengehäuse als Einhausung oder Ummantelung vorgesehen. Das Zellengehäuse ist beispielsweise als eine Aluminium-Verbundfolie oder als eine Aluminium-Laminatfolie ausgeführt, wobei derartige flexible oder folienartige Zellengehäuse auch als Pouchbeutel oder Pouchfolien-Mantel und Batteriezellen mit einem solchen Zellengehäuse auch als Pouchzellen oder Softpack-Zellen bezeichnet sind.

Im Rahmen eines Qualitätsmanagements beziehungsweise Sicherheitsmanagements wird bei der Herstellung von Batteriezellen häufig eine FMEA (englisch: Failure Mode and Effects Analysis, deutsch: Fehlermöglichkeitsanalyse, Fehlereinflussanalyse oder Auswirkungsanalyse) zur Fehlervermeidung und Erhöhung der technischen Zuverlässigkeit vorbeugend eingesetzt. Hierbei analysiert eine Prozess-FMEA (P-FMEA, PFMEA) insbesondere mögliche Schwachstellen im Herstellungsprozess der Batteriezelle zum Ziele einer Qualitätssteigerung.

Zum Qualitätsmanagement oder Sicherheitsmanagement der Batterieherstellung kann hierbei ein sogenanntes Poka Yoke-Konzept genutzt werden. Der aus dem Japanischen stammende Begriff Poka Yoke bezeichnet hierbei allgemein ein aus mehreren Elementen bestehendes Prinzip, welches technische Vorkehrungen oder Einrichtungen zur sofortigen Fehleraufdeckung und Fehlerverhinderung umfasst. Mit Poka Yoke wird häufig durch einfache und wirkungsvolle Systeme dafür gesorgt, dass Fehlhandlungen im Fertigungsprozess nicht zu Fehlern am Endprodukt führen.

Ein wichtiger Prozessschritt bei der Herstellung der Batteriezelle ist die Kontaktierung zwischen den Ableiterfähnchen des Elektrodenstapels und den Ableitertabs oder Stromableitern. Ein Verwechseln der Stromableiter führt hierbei zu einer nicht funktionsfähigen Zelle. Die Stromableiter oder Ableitertabs der Anode und Kathode - im nachfolgenden auch als Anodenableiter und Kathodenableiter bezeichnet - unterscheiden sich konstruktiv hierbei im Wesentlichen lediglich im Material (Kupfer für die Anode, und Aluminium für die Kathode). Bei einer optischen Kontrolle unterscheiden sich die Anodenableiter und Kathodenableiter somit lediglich in ihrer äußeren Farbe, wobei der Aluminiumableiter (Kathode) beispielsweise eine hellgraue und der Kupferableiter (Anode) beispielsweise eine dunkelgraue Farbe aufweisen. Dieser Farbunterschied stellt jedoch keine ausreichende Poka Yoke im Sinne einer PFMEA dar. Dadurch ist die Kontaktierung zwischen den Ableiterfähnchen und den Stromableitern vergleichsweise fehleranfällig, wodurch aufwendige und kostenintensive automatisierte Erkennungen notwendig sind.

Darüber hinaus ist die exakte Positionierung der Vorsiegelbänder im Batteriegehäuse (Pouchbeutel) aus funktions- und sicherheitstechnischen Gründen notwendig. Eine schlechte Positionierung kann zu einem Isolationsfehler führen, sodass ein elektrischer Kurzschluss zwischen Stromableiter und dem Batteriegehäuse auftreten kann.

Zur Abdichtung der Stromableiter gegenüber dem Batteriegehäuse sind in der Regel sogenannte Vorsiegelbänder vorgesehen, welche mit den Stromableitern, insbesondere stoffschlüssig, gefügt sind, und welche mit diesen eine vorgefertigte Baueinheit bilden. Zur Abdichtung des Pouchbeutels werden die Pouchfolie und das aus Kunststoff gefertigte Vorsiegelband beispielsweise mittels eines Heißsiegelverfahrens stoffschlüssig und fluiddicht gefügt. Somit ist eine exakte Positionierung der Stromableiter beziehungsweise des Vorsiegelbandes auch wichtig für die Dichtigkeit der Batteriezelle. Die Dichtigkeit ist sicherheits- und funktionsrelevant für die Batteriezelle.

In der Regel erfolgt die (Vor-)Positionierung der Stromableiter über die Außengeometrie der Ableiter. Hierbei müssen die Toleranzen in der Montagevorrichtung die Außentoleranzen der Ableiter berücksichtigen. Dadurch kann es zu einem rotatorischen und translatorischen Versatz der Stromableiter relativ zu dem Ableiterfähnchen und/oder dem Batteriegehäuse kommen, wodurch das Vorsiegelband nicht in der vorgesehenen Dichtungsebene liegen kann.

Im Hinblick auf eine effektive PFMEA ist daher ein geeignetes Poka Yoke der Stromableiter wünschenswert. Das Poka Yoke kann beispielsweise durch eine Automatisierung des Herstellungsprozesses realisiert werden. Hierbei besteht jedoch die Gefahr einer falschen Einrüstung oder Bestückung der Montagevorrichtungen, welche beispielsweise auch trotz eines Scannens von Barcodes, beispielsweise aufgrund von Manipulationen, auftreten kann. Eine reine Automatisierung der Herstellung stellt somit keine ausreichende Sicherheit dar.

Beispielsweise ist es als Poka Yoke möglich, dass sich die Anodenableiter und Kathodenableiter durch einen deutlich erkennbaren farblichen Unterschied der Vorsiegelbänder unterscheiden. Die Färbung der Vorsiegelbänder wird hierbei zumeist unter Zugabe von Grafit bewirkt, sodass die elektrische Isolationswirkung des Vorsiegelbandes zwischen dem Stromableiter und dem Batteriegehäuse reduziert wird. Dadurch wird die Betriebssicherheit der Batteriezelle nachteilig beeinflusst.

Ebenso denkbar sind beispielsweise unterschiedliche Abmessungen der Stromableiter, beispielsweise unterschiedliche Breiten. Die Abmessungen der Stromableiter sind herkömmlicherweise für eine bestimmte Stromtragfähigkeit ausgelegt, so dass bei unterschiedlichen Breiten zumindest einer der Stromableiter überdimensioniert ausgeführt wäre, wodurch zusätzliche Materialkosten entstehen. Des Weiteren ist es bei unterschiedlichen Abmessungen der Stromableiter nicht möglich, ein gemeinsames Stanzwerkzeug für die Anodenableiter und Kathodenableiter zu verwenden, wodurch die Kosten weiter erhöht werden.

Des Weiteren sind beispielsweise Ausklinkungen, also dreiseitig geschlossene Aussparungen, an einem Rand oder an einer Kante der Anodenableiter und Kathodenableiter vorgesehen, welche sich beispielsweise in der Geometrie oder Form unterscheiden. Die Ausklinkungen gewährleisten eine Poka Yoke, jedoch können die Ausklinkungen nicht zu einer mechanischen Positionierung der Ableitertabs relativ zum Pouchbeutel verwendet werden.

Der Erfindung liegt die Aufgabe zugrunde, ein besonders geeignetes Stromableitersystem für eine Batteriezelle anzugeben. Insbesondere soll eine einfache und zuverlässige Poka Yoke für eine PFMEA realisiert werden. Vorzugsweise soll über die Poka Yoke auch eine mechanische Positionierung der Stromableiter ermöglicht werden. Der Erfindung liegt weiterhin die Aufgabe zugrunde, eine besonders geeignete Batteriezelle sowie eine besonders geeignete Verwendung anzugeben.

Hinsichtlich des Stromableitersystems wird die Aufgabe mit den Merkmalen des Anspruchs 1 und hinsichtlich der Batteriezelle mit den Merkmalen des Anspruchs 9 sowie hinsichtlich der Verwendung mit den Merkmalen des Anspruchs 10 erfindungsgemäß gelöst. Vorteilhafte Ausgestaltungen und Weiterbildungen sind Gegenstand der Unteransprüche.

Das erfindungsgemäße Stromableitersystem ist für eine Batteriezelle, insbesondere für eine Pouchzelle, vorgesehen, sowie dafür geeignet und eingerichtet. Das Stromableitersystem weist zwei Stromableiter oder Ableitertabs auf, welche nachfolgend als Kathodenableiter und Anodenableiter bezeichnet sind. Die Stromableiter sind als Metallstreifen mit jeweils einem Vorsiegelband ausgeführt. Die Stromableiter sind hierbei dazu vorgesehen und eingerichtet mit den entsprechenden Ableiterfähnchen eines Elektroden- oder Zellstapels der Batteriezelle kontaktiert zu werden. Die Stromableiter weisen hierbei geeigneterweise einen Metallstreifen auf, welcher aus dem gleichen Material wie die zugeordneten Ableiterfähnchen hergestellt ist. Vorzugsweise ist der Anodenableiter aus einem Kupfermaterial und der Kathodenableiter aus einem Aluminiummaterial hergestellt.

Erfindungsgemäß weisen der Kathodenableiter und der Anodenableiter jeweils ein erstes Musterelement und ein zweites Musterelement auf. Unter einem Musterelement ist hierbei insbesondere eine optische und/oder mechanische Markierung oder Kennzeichnung der Stromableiter zu verstehen. Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Die ersten und zweiten Musterelemente weisen hierbei eine unterschiedliche Geometrie oder Form auf, wobei sich die Kathodenableiter und Anodenableiter hinsichtlich einer Anordnung oder Positionierung der ersten und zweiten Musterelemente unterscheiden. Mit anderen Worten sind die ersten und zweiten Musterelemente an dem Kathodenableiter unterschiedlich angeordnet oder positioniert als die ersten und zweiten Musterelemente an dem Anodenableiter.

Dadurch ist ein besonders geeignetes Stromableitersystem realisiert. Insbesondere wird über die unterschiedlichen Abstände der Musterelemente für Anode und Kathode eine einfache, geeignete, und zuverlässige Poka Yoke im Hinblick auf eine PFMEA realisiert.

Bei den Musterelementen kann es sich um optische Markierungen handeln, welche auf die Oberfläche der Stromableiter aufgebracht sind. Dadurch ist eine einfache und zuverlässige optische Erkennung während der Herstellung der Batteriezelle ermöglicht.

In einer bevorzugten Ausführung sind die ersten und zweiten Musterelemente als Aussparungen ausgeführt. Vorzugsweise durchsetzen die Musterelemente hierbei den jeweiligen Stromableiter vollständig. Dadurch ist zusätzlich oder alternativ zu einer optischen Unterscheidbarkeit auch eine mechanische Unterscheidbarkeit der Stromableiter realisiert, wodurch die Poka Yoke verbessert wird.

Die Musterelemente sind hierbei beispielsweise als dreiseitig geschlossene Aussparungen oder Ausklinkungen an einem Rand oder einer Kante des jeweiligen Stromableiters ausgeführt. In einer vorteilhaften Weiterbildung sind die Musterelemente insbesondere als allseitig geschlossene Aussparungen ausgeführt. Mit anderen Worten sind die Musterelemente als Löcher oder (Durchführ-)Öffnungen oder Stanzungen oder Bohrungen in das Innere der Stromableiter, also in die Fläche der Stromableiter, eingebracht. Die Musterelemente sind also nicht an einem Rand oder einer Kante der Stromableiter angeordnet. Die Musterelemente sind beispielsweise in einem Bereich der Stromableiter eingebracht, welcher beim späteren Montage- oder Kontaktierungsprozess nicht stört. Insbesondere ist es möglich, den Bereich mit den Musterelementen nach einem solchen Montage- oder Kontaktierungsprozess von den Stromableitern abzutrennen oder abzuschneiden.

Durch die umfangsseitig geschlossenen Musterelemente dieser Weiterbildung ist es möglich, die Musterelemente zusätzlich zur Poka Yoke auch für eine (mechanische) Positionierung der Stromableiter bei der Herstellung zu nutzen. Mit anderen Worten ist eine vorteilhafte Funktionsintegration der Funktionen "Positionierung" und Poka-Yoke realisiert. Die Positionierung und Toleranzen der Musterelemente ist aufgrund der Ausführung als Aussparung oder Loch besonders kostengünstig und sehr genau und präzise realisierbar, beispielsweise mit einer Genauigkeit von ± 0,05 mm (Millimeter), so dass sich eine hohe Positionierungsgenauigkeit der Stromableiter im Zuge eines Montage- oder Kontaktierungsprozesses ergibt. Die mechanische dadurch realisierte mechanische Poka Yoke ist extrem robust und erfüllt die höchste Fehlervermeidungsstufe im Sinne einer PFMEA.

Vorzugsweise erfolgt eine Positionierung der Stromableiter mittels der Musterelemente während der Montage der Gesamtzelle, somit kann eine Vorpositionierung vor dem Fügen und eine zusätzliche automatisierte Handhabung entfallen. Dadurch werden Investitionen gespart. Zusätzlich wird für die Batteriezellenherstellung weniger Fläche in Trockenräumen beansprucht, wodurch die Kosten weiter reduziert werden. Das Stromableitersystem ist somit besonders kostengünstig, da mindestens eine automatisierte Handhabung entfallen kann. Insbesondere sind die Werkzeuge zur Herstellung der Musterelemente einfach und kostengünstig. Des Weiteren sind die Halbzeuge für die Positionierung somit als Normteile ausführbar, wodurch die Kosten weiter reduziert werden.

In einer möglichen Ausbildung unterscheiden sich die ersten und zweiten Musterelemente hinsichtlich ihrer Symmetrie. Dadurch ist eine einfache und zuverlässige Unterscheidung für ein Poka Yoke realisiert. In einer möglichen Ausgestaltung sind die ersten Musterelemente rotationssymmetrisch und die zweiten Musterelemente achsensymmetrisch ausgeführt. Dadurch ist eine einfache Erkennung und Ausrichtung der Stromableiter ermöglicht. In einer vorteilhaften Ausführung sind die ersten Musterelemente als Rundlöcher und die zweiten Musterelemente als Langlöcher ausgeführt. Das Stromableitersystem mit Loch und Langloch kann zur sehr genauen (± 0,05 mm) Positionierung und Orientierung der Stromableiter genutzt werden.

Das Rundloch weist vorzugsweise eine runde, insbesondere kreisrunde, Form oder Geometrie auf, wobei das Langloch insbesondere eine ovale oder elliptische Form oder Geometrie aufweist.

Ein zusätzlicher oder weiterer Aspekt der Erfindung sieht vor, dass die ersten und zweiten Musterelemente hinsichtlich einer Längsrichtung des jeweiligen Ableiters auf einer gemeinsamen Höhe angeordnet sind, wobei sich der Kathodenableiter und der Anodenableiter hinsichtlich der Positionierung der ersten und zweiten Musterelemente entlang einer senkrecht zur Längsrichtung orientierten Querrichtung unterscheiden. Dadurch sind die Ableiter durch einen Linienscan einer optischen Erkennung einfachen unterscheidbar.

Vorzugsweise weisen die zweiten Musterelemente entlang der Querrichtung eine größere Ausdehnung als die ersten Musterelemente auf. Die ersten, insbesondere rotationssymmetrischen, Musterelemente legen somit vorzugsweise eine transversale Positionierung des Stromableiters fest, wobei die zweiten, insbesondere achsensymmetrischen, Musterelemente entlang der Querrichtung die Fixierung einer rotatorischen Hochachse ermöglichen. Mit anderen Worten erfolgt beispielsweise über ein Rundloch zunächst eine genaue Positionierung des Stromableiters in X- und Y-Richtung, wobei ein sich in Querrichtung erstreckendes Langloch ein Verschwenken oder Drehen bezüglich einer durch das Rundloch verlaufenden Achse ermöglicht, so dass stets eine zuverlässige und betriebssichere mechanische Positionierung der Stromableiter gewährleistet ist.

Die erfindungsgemäße Batteriezelle ist vorzugsweise als eine Pouch- oder Softbagzelle ausgeführt. Die Batteriezelle weist hierbei ein beispielsweise als Pouchbeutel ausgeführtes Batteriegehäuse und einen darin aufgenommenen Elektroden- oder Zellenstapel auf. Die Batteriezelle weist weiterhin ein vorstehend beschriebenes Stromableitersystem auf. Die Ableiterfähnchen des Elektrodenstapels sind hierbei mit dem Kathodenableiter zu einer Kathode und mit dem Anodenableiter zu einer Anode der Batteriezelle verschaltet. Dadurch ist eine besonders geeignete Batteriezelle realisiert.

Die erfindungsgemäße Verwendung des vorstehend beschriebenen Stromableitersystems sieht vor, dass das Stromableitersystem zur Herstellung einer Batteriezelle verwendet wird. Dadurch ist eine hinsichtlich der PFMEA besonders geeignete Poka Yoke realisiert, wobei vorzugsweise zusätzlich eine mechanische Positionierbarkeit der Stromableiter ermöglicht ist, wodurch die Herstellung der Batteriezelle wesentlich vereinfacht wird. Insbesondere werden somit Herstellungs- oder Produktionsfehler vorteilhaft und einfach vermieden.

Nachfolgend ist die Erfindung anhand einer Zeichnung näher erläutert. Darin zeigen in schematischen und vereinfachten Darstellungen:
- Fig. 1: ein Stromableitersystem mit einem Anodenableiter und mit einem Kathodenableiter in einer ersten Ausführungsform,
- Fig. 2: den Kathodenableiter in einer zweiten Ausführungsform, und
- Fig. 3: den Kathodenableiter in einer dritten Ausführungsform.

Einander entsprechende Teile und Größen sind in allen Figuren stets mit den gleichen Bezugszeichen versehen.

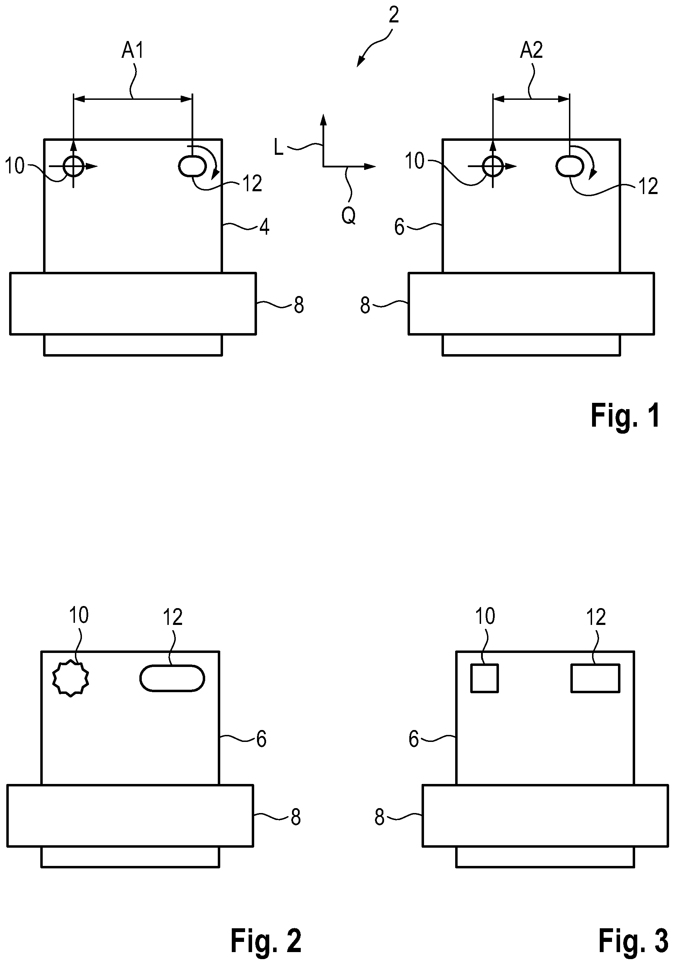

Das in der Fig. 1 dargestellte Stromableitersystem 2 weist zwei Stromableiter oder Ableitertabs 4, 6 mit jeweils einem daran befestigten Vorsiegelband 8 auf. Der Stromableiter 4 ist als ein Kathodenableiter ausgeführt und nachfolgend auch als solcher bezeichnet. Der Stromableiter 6 ist entsprechend als ein Anodenableiter ausgeführt und nachfolgend auch als solcher bezeichnet. Die Stromableiter 4, 6 sind hierbei als etwa rechteckförmige Metallstreifen ausgeführt, wobei der Kathodenableiter 4 insbesondere als ein Aluminiumstreifen und der Anodenableiter 6 insbesondere als ein Kupferstreifen ausgeführt sind.

Die Stromableiter 4, 6 sind dazu vorgesehen und eingerichtet mit Ableiterfähnchen einer nicht näher gezeigten Pouchzelle (Batteriezelle) kontaktiert zu werden, wobei das Vorsiegelband 8 einerseits eine elektrische Isolation zwischen den Stromableitern 4, 6 und eines Pouchbeutels (Batteriegehäuse) und andererseits eine fluiddichte Abdichtung zum Pouchbeutel realisiert.

Die Längsseiten der rechteckförmigen Stromableiter 4, 6 erstrecken sich entlang einer Längsrichtung L, wobei die hierzu senkrecht orientierten Kurzseiten entlang einer Querrichtung Q orientiert sind.

In die Stromableiter 4, 6 sind jeweils zwei Musterelemente 10, 12 eingebracht. Das Musterelementpaar ist hierbei für beide Stromableiter 4, 6 gleich ausgeführt. Die Musterelemente 10, 12 sind hierbei als allseitig geschlossene Aussparungen, also beispielsweise als Löcher, in die Stromableiter 4, 6 eingebracht. Die Musterelemente 10 weisen hierbei eine unterschiedliche Geometrie oder Form als die Musterelemente 12 auf. Insbesondere unterscheiden sich die Geometrien oder Formen der Musterelemente 10 und 12 hinsichtlich ihrer Symmetrie. Vorzugsweise weisen die Musterelemente 10 eine rotationssymmetrische Form oder Geometrie, und die Musterelemente 12 eine achsensymmetrische Form oder Geometrie auf. Vorzugsweise weisen die Musterelemente 12 hierbei entlang der Querrichtung Q eine größere Ausdehnung als die Musterelemente 10 auf. In dem Ausführungsbeispiel der Fig. 1 sind die Musterelemente 10 als kreisrunde Rundlöcher und die Musterelemente 12 als ovale oder elliptische Langlöcher ausgeführt, wobei sich die Längsachse der Langlöcher entlang der Querrichtung Q erstreckt.

Die Stromableiter 4, 6 weisen im Wesentlichen die gleichen Abmessungen entlang der Richtungen L und Q auf, und unterscheiden sich lediglich hinsichtlich ihres Materials sowie hinsichtlich der relativen Anordnung der Musterelemente 10, 12.

Die Musterelemente 10, 12 der Stromableiter 4, 6 sind hinsichtlich der Längsrichtung L auf der gleichen Höhe angeordnet. Mit anderen Worten weisen die Musterelemente 10, 12 bei beiden Stromableitern 4, 6 die gleichen Abstände entlang der Längsrichtung L zu den Kurzseiten der Stromableitern 4, 6 auf. Die Stromableiter 4, 6 unterscheiden sich hierbei insbesondere dahingehend, dass der Abstand zwischen den Musterelementen 10, 12, also der Abstand entlang der Querrichtung Q, unterschiedlich ausgeführt ist. In dem in Fig. 1 gezeigten Ausführungsbeispiel weisen die Musterelemente 10, 12 des Kathodenableiters 4 beispielsweise einen vergleichsweise großen Abstand A1, und die die Musterelemente 10, 12 des Anodenableiters 4 beispielsweise einen vergleichsweise kleinen Abstand A2 auf.

Durch die Musterelemente 10, 12 ist ein besonders geeignetes Stromableitersystem 2 realisiert. Insbesondere wird über die unterschiedlichen Abstände A1, A2 der Musterelemente 10, 12 für die Kathodenableiter 4 und Anodenableiter 6 ein besonders geeignetes und zuverlässiges Poka Yoke im Hinblick auf eine PFMEA realisiert. Die Ausführung der Musterelemente 10, 12 als Löcher oder Aussparungen der Stromableiter 4, 6 ermöglicht weiterhin eine (mechanische) Positionierung der Stromableiter 4, 6 mittels der Musterelemente 10, 12 im Zuge einer Batteriezellen- oder Pouchzellenherstellung.

Die Musterelemente 10 ermöglichen im Zuge der mechanischen Positionierung insbesondere eine transversale Position der Stromableiter 4, 6, also entlang einer X- und Y-Richtung, welche beispielsweise parallel zur Längs- und Querrichtung L, Q orientiert sind. Die transversale Positionierbarkeit ist hierbei in der Fig. 1 mit zwei senkrechten Pfeilen dargestellt. Die beabstandeten Musterelemente 12 ermöglichen ein Verschwenken oder Drehen bezüglich einer durch das Musterelement 10 verlaufenden Achse, was in der Fig. 1 mittels eines gebogenen oder gekrümmten Pfeils dargestellt ist. Dadurch ist eine stets zuverlässige Ausrichtung und Positionierung der Stromableiter 4, 6 im Zuge der Batteriezellenherstellung ermöglicht.

Die Positionierung und Toleranzen der Musterelemente 10, 12 ist aufgrund der Ausführung als Löcher besonders kostengünstig und sehr genau und präzise realisierbar, beispielsweise mit einer Genauigkeit von ± 0,05 mm (Millimeter).

In den Figuren 2 und 3 sind zwei weitere Ausführungsbeispiele für die Musterelemente 10, 12 gezeigt. Die Fig. 2 und Fig. 3 zeigen hierbei beispielhaft lediglich den jeweiligen Kathodenableiter 6, wobei die nachfolgenden Ausführungen entsprechend auf den korrespondierenden Anodenableiter 4 übertragbar sind.

In dem Ausführungsbeispiel der Fig. 2 weist das Musterelement 10 als eine sternförmige Form oder Geometrie auf. Das Musterelement 10 ist hierbei insbesondere als ein Zehn-Bogenzahn ausgeführt. Das Musterelement 12 ist - ähnlich zur vorstehend beschriebenen Ausführung - als ein ovales oder elliptisches Langloch ausgeführt.

In dem Ausführungsbeispiel der Fig. 3 ist das Musterelement 10 als ein quadratisches Loch, und das Musterelement 12 als ein rechteckförmiges Loch ausgeführt.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

So sind auch anderen Formen und Geometrien für die Musterelemente 10, 12, wie beispielsweise Dreieckformen oder Mehreckformen, denkbar.

### Bezugszeichenliste

- 2: Stromableitersystem
- 4: Stromableiter, Kathodenableiter
- 6: Stromableiter, Anodenableiter
- 8: Vorsiegelband
- 10: Musterelement
- 12: Musterelement

- L: Längsrichtung
- Q: Querrichtung
- A1, A2: Abstand

## Patentansprüche

1. Stromableitersystem (2) für eine Batteriezelle, aufweisend einen Kathodenableiter (4) und einen Anodenableiter (6), welche jeweils mit einem Vorsiegelband (8) versehen sind,
- wobei der Kathodenableiter (4) und der Anodenableiter (6) jeweils mit einem ersten Musterelement (10) und mit einem zweiten Musterelement (12) versehen sind,
- wobei die ersten und zweiten Musterelemente (10, 12) unterschiedliche Geometrien aufweisen, und
- wobei der Kathodenableiter (4) und der Anodenableiter (6) eine unterschiedliche Anordnung oder Positionierung der ersten und zweiten Musterelemente (10, 12) aufweisen.

2. Stromableitersystem (2) nach Anspruch 1,
**dadurch gekennzeichnet,**
**dass** die ersten und zweiten Musterelemente (10, 12) als Aussparungen ausgeführt sind.

3. Stromableitersystem (2) nach Anspruch 2,
**dadurch gekennzeichnet,**
**dass** die die ersten und zweiten Musterelemente (10, 12) als allseitig geschlossene Aussparungen ausgeführt sind.

4. Stromableitersystem (2) nach einem der Ansprüche 1 bis 3,
**dadurch gekennzeichnet,**
**dass** die ersten und zweiten Musterelemente (10, 12) hinsichtlich ihrer Symmetrie unterscheiden.

5. Stromableitersystem (2) nach einem der Ansprüche 1 bis 4,
**dadurch gekennzeichnet,**
- **dass** die ersten Musterelemente (10) rotationssymmetrisch ausgeführt sind, und
- **dass** die zweiten Musterelemente (12) achsensymmetrisch ausgeführt sind.

6. Stromableitersystem (2) nach einem der Ansprüche 1 bis 5,
**dadurch gekennzeichnet,**
- **dass** die ersten Musterelemente (10) als Rundlöcher ausgeführt sind, und
- **dass** die zweiten Musterelemente (12) als Langlöcher ausgeführt sind.

7. Stromableitersystem (2) nach einem der Ansprüche 1 bis 6,
**dadurch gekennzeichnet,**
**dass** die ersten und zweiten Musterelemente (10, 12) hinsichtlich einer Längsrichtung (L) des jeweiligen Ableiters (4, 6) auf einer gemeinsamen Höhe angeordnet sind, wobei sich der Kathodenableiter (4) und der Anodenableiter (6) hinsichtlich der Positionierung der ersten und zweiten Musterelemente (10, 12) entlang einer senkrecht zur Längsrichtung (L) orientierten Querrichtung (Q) unterscheiden.

8. Stromableitersystem (2) nach Anspruch 7,
**dadurch gekennzeichnet,**
**dass** die zweiten Musterelemente (12) entlang der Querrichtung (Q) eine größere Ausdehnung als die ersten Musterelemente (10) aufweisen.

9. Batteriezelle aufweisend ein Batteriegehäuse und einen darin eingesetzten Elektrodenstapel sowie mit einem Stromableitersystem (2) nach einem der Ansprüche 1 bis 8, wobei der Elektrodenstapel mit einem Kathodenableiter (4) als Kathode und mit einem Anodenableiter (6) als Anode kontaktiert ist, welche zumindest abschnittsweise aus dem Batteriegehäuse ragen.

10. Verwendung eines Stromableitersystems (2) nach einem der Ansprüche 1 bis 8 zur Herstellung einer Batteriezelle.
